# EUROPEAN PATENT APPLICATION

(11) **EP 0 910 071 A1**
(43) Date of publication of application: **21.04.1999**
(21) Application number: 98119525.8
(22) Date of filing: 15.10.1998
(51) Int. Cl.: G11B 7/09

(54) **Optical information recording/reproduction apparatus**

(30) Priority: 16.10.1997 JP 282431/97
(71) Applicant: Matsushita Electric Industrial Co., Ltd., Kadoma-shi, Osaka-fu, 571-8501 (JP)
(72) Inventor: Mohri, Masanari c/o Matsushita Elec. Ind. Co. Ltd., Kadoma-shi, Osaka-fu, 571-8501 (JP); Sakaguchi, Akihiro Matsushita Elec. Ind. Co. Ltd., Kadoma-shi, Osaka-fu, 571-8501 (JP); Santo, Takeo c/o Matsushita Elec. Ind. Co. Ltd., Kadoma-shi, Osaka-fu, 571-8501 (JP); Yamamoto, Hiroshi c/o Matsushita Elec.Ind. Co.Ltd., Kadoma-shi, Osaka-fu, 571-8501 (JP); Saitoh, Youichi c/o Matsushita Elec. Ind. Co. Ltd., Kadoma-shi, Osaka-fu, 571-8501 (JP)
(74) Representative: Grünecker, Kinkeldey, Stockmair & Schwanhäusser Anwaltssozietät

(57) **Abstract**

A magnetically-balanced position of the lens holder (3) in the tracking direction where an optical offset signal is produced will be avoided. The tracking magnet (11) is magnetized to have magnetic poles indicated by marks N, S, and the auxiliary magnet (15) is magnetized to have the opposite polarity to the tracking magnet (11) adjacent thereto. The magnetic lines of force of the magnetic circuit thus constructed become as shown by marks L and P under the mutual influences of the magnets adjacent to each other, and the magnetic moment to the magnetic piece (9) is maximized, resulting in a magnetically-unstable position. Therefore, a magnetically-balanced position of the lens holder (3) in the tracking direction where an optical offset signal is produced can be caused to stand still at positions indicated by marks X, X', or Y.

## Description

### Field of the Invention

In order to record on and reproduce from a plurality of optical information recording media having different base member thickness by one optical information recording/reproduction apparatus, the present invention relates to an optical information recording/reproduction apparatus, comprising a plurality of objective lenses so that respective optimum beam spots are formed on the respective optical information recording media, and an objective lens switching mechanism for switching them.

### Background of the Invention

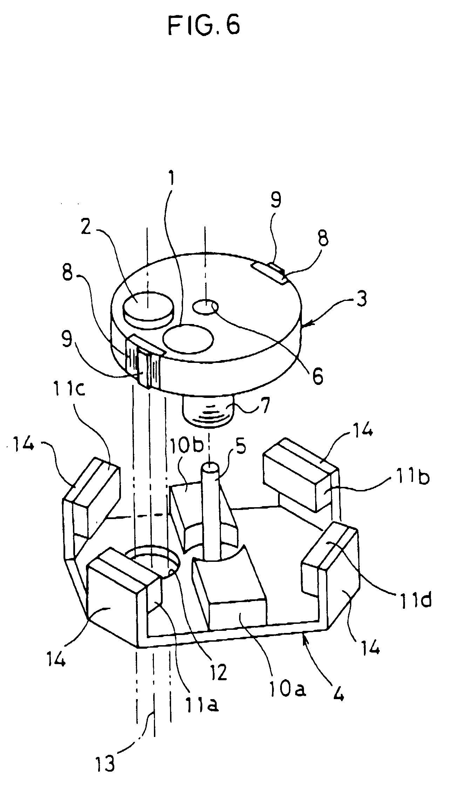

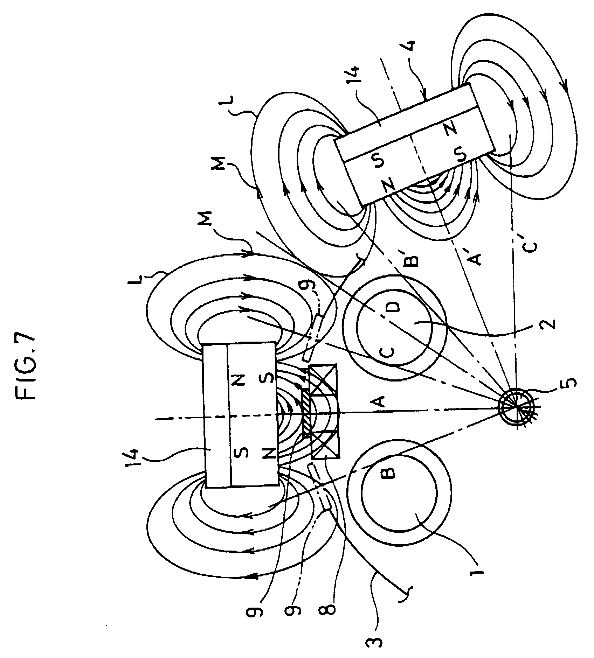

Conventionally, as this sort of optical information recording/reproduction apparatus, there is known an apparatus described in ITE Technical Report Vol. 20, No. 21, pp. 41 to 46 (DVD player and its control system). With reference to FIGS. 6 and 7, the description will be made of a conventional objective lens switching mechanism.

FIG. 6 shows a conventional apparatus capable of switching it between a state in which an objective lens 1 is used and a state in which an objective lens 2 is used.

A lens holder 3 in which objective lenses 1 and 2 are mounted is mounted rotatably around a supporting shaft 5, and slidably in the lengthwise direction thereof by inserting the supporting shaft 5 provided at the center of an actuator base 4 into a bearing 6 formed at the center of the lens holder 3.

Further, on focusing coil 7, tracking coils 8 and magnetic pieces 9 in addition to the objective lenses 1 and 2.

On the actuator base 4, focusing magnets 10a and 10b are provided facing to the focusing coil 7, and further tracking magnets 11a, 11b, 11c and 11d are mounted to surround the lens holder 3 therewith.

The lens holder 3 is capable of driving the supporting shaft 5 in the sliding direction and in the direction of rotation by means of an electromagnetic force generated by electric current supplied to each of the focusing coil 7 and the tracking coils 8 through an electric supply line (not shown), and the focusing magnets 10a and 10b and the tracking magnets 8.

On the actuator base 4, an aperture 12 is formed correspondingly to the positions where the objective lenses 1 and 2 in the lens holder 3 are disposed, and the lens holder 3 is at rest at a position whereat one of the objective lenses 1 and 2 faces the aperture 12.

A light beam 13 forms a beam spot on an optical disk (not shown), which is an optical information recording medium, through the objective lens 1. Also, the objective lens 2 is switched toward the direction of rotation around the supporting shaft 5 by means of an electromagnetic force generated by switching current supplied from a lens switching circuit (not shown) to the tracking coils 8 and the tracking magnets 11a to 11d so that the objective lens 2 performs the same operation with respect to the light beam 13 as in the case of the objective lens 1.

FIG. 7 is a plan view showing the essential portions shown in FIG. 6 in an assembled state, in which reference numeral 14 designates a convex piece of the actuator base 4. N and S represent magnetic poles in the tracking magnets 11a to 11d and their polarities. Reference numeral L designates magnetic lines of force in the tracking magnets 11a to 11d, and an arrow M designates an advancing direction of the magnetic lines of force L.

With reference to this FIG. 7, positioning of the lens holder 3 in the direction of rotation, that is, alignment between the objective lens 1 or 2 and the light beam 13 will be described.

The positioning of the lens holder 3 in the direction of rotation is determined by a magnetically-balanced position between the tracking magnets 11a to 11d and the magnetic pieces 9. More specifically, the lens holder 3 stands still at such a magnetically-balanced position that the magnetic induction of the two is maximized, and that the magnetic moment of magnetic pieces 9 in the magnetic fields of the tracking magnets 11a to 11d is minimized.

### Disclosure of the Invention

In this conventional structure, however, the magnetic flux density distribution of the tracking magnets 11a to 11d becomes as shown in FIG. 7, and therefore, in the positioning of the lens holder 3 in the tracking direction, that is, as the magnetically- balanced positions between the tracking magnets 11a to 11d and the magnetic pieces 9, there are given five places indicated by alternate long and short dash lines A, B, C, D, A', B' and C' in the figure.

The positions A and A' are optically-normal positions of the lens holder 3 in the tracking direction, and the position D is a position not to affect the tracking control. At each of the positions B, C, B' and C', however, the light beam 13 shown in FIG. 6 forms a beam spot on an optical disk (not shown), which is an optical information recording medium, through the objective lens 1 or 2 although its light amounts decrease. A flux of light reflected by the optical information recording medium becomes a false detection signal for a photodetector (not shown), and becomes an optical offset signal.

Therefore, in the positioning of the lens holder 3 in the tracking direction by magnetic balance between the tracking magnets 11a to 11d and the magnetic pieces 9, there is a problem that such an optical offset signal as shown at positions B, C, B' and C' is produced.

The present invention has been proposed to solve the above-described conventional problem, and its object is to provide an optical information recording/reproduction apparatus capable of avoiding, by simple structure, a magnetically-balanced position of the lens holder in the tracking direction where an optical offset signal is produced. The optical information recording/reproduction apparatus is provided with auxiliary magnetic field generating means for providing a magnetically- unstable position adjacent to the tracking magnets. According to this structure, the magnetically-balanced position of the lens holder in the tracking direction where an optical offset signal is produced can be avoided by simple structure.

To further go into details, an optical information recording/reproduction apparatus according to the present invention is characterized in that in an optical information recording/reproduction apparatus for rotatably supporting a lens holder having a plurality of objective lenses on an actuator base, and having an objective lens switching mechanism for switching so that an objective lens for use, of the objective lenses stands still at a normal position on the actuator base, the structure is arranged such that the lens holder is caused to stand still at the normal position by an attracting operation between magnetic pieces fixed to the lens holder and a plurality of tracking magnets disposed on the actuator base along the rotating path of the lens holder, that there are provided tracking coils facing to the tracking magnets disposed in the vicinity of the magnetic pieces of the lens holder, that the tracking coils are electrically energized on the basis of a tracking signal during recording/reproduction thereby to correct the static position of the lens holder, that the lens holder is caused to rotate by electrically energizing the tracking coils through a switching signal on switching the objective lens for use, and there is provided auxiliary magnetic field generating means, which provides a magnetically-unstable position, between the tracking magnets adjacent to each other in the plurality of tracking magnets.

Also, it is characterized by the fact that it is constituted by disposing those magnetic pieces and tracking coils which have been disposed on the side of the lens holder on the side of the actuator base, and by disposing the plurality of tracking magnets disposed on the side of the actuator base on the side of the lens holder.

To be concrete, the auxiliary magnetic field generating means is constituted by providing an auxiliary magnet magnetized to have the opposite polarity to the tracking magnet between the tracking magnets adjacent to each other in the plurality of tracking magnets.

Also, the auxiliary magnetic field generating means is constituted by providing the tracking magnet with a side yoke.

Also, an optical information recording/reproduction apparatus according to the present invention is characterized in that in an optical information recording/reproduction apparatus for rotatably supporting a lens holder having an objective lens on an actuator base, and having a tracking mechanism which causes the objective lens to stand still at a normal position on the actuator base, the structure is arranged such that the lens holder is caused to stand still at the normal position by an attracting operation between the magnetic pieces fixed to the lens holder and the tracking magnets disposed on the actuator base along the rotating path of the lens holder, that there are provided tracking coils facing to the tracking magnets disposed in the vicinity of the magnetic pieces of the lens holder, that the tracking coils are electrically energized on the basis of a tracking signal during recording/reproduction to correct the static position of the lens holder, and that there is provided auxiliary magnetic field generating means, which provides a magnetically-unstable position, adjacent to the tracking magnet.

As described above, according to the present invention, by the provision of the auxiliary magnet adjacent to the tracking magnet, it is possible to maximize the magnetic moment at a position of the lens holder in the tracking direction where an optical offset signal is produced, thus easily making the position into a magnetically-unstable position.

In an objective lens switching mechanism provided with two pairs of tracking magnets, it is possible to easily avoid a magnetically-balanced position of the lens holder in the tracking direction where an optical offset signal is produced, and the magnetically-balanced positions can be provided at three places, enabling the angle of rotation of the lens holder to be enlarged. Thus, the lens holder can be caused to stand still at an optically-stable position in magnetic balance in a magnetic circuit using a magnet having two poles magnetized as a tracking magnet, or a magnetic circuit in the tracking driving direction corresponding to a lens holder having a plurality of objective lenses.

Also, in a tracking mechanism provided with a pair of tracking magnets, it is possible-to easily avoid a magnetically-balanced position of the lens holder in the tracking direction where an optical offset signal is produced, the magnetically-balanced positions can be provided at two places, and the lens holder can be caused to stand still at an optically-stable position in magnetic balance in a magnetic circuit in the tracking driving direction.

### Brief Description of the Drawings

FIG. 1 is an exploded perspective view showing the essential portions of an optical information recording/reproduction apparatus according to the present invention (first embodiment);
FIG. 2 is a plan view showing the embodiment in an assembled state;
FIG. 3 is an exploded perspective view showing the essential portions of an optical information recording/reproduction apparatus according to the present invention (second embodiment);
FIG. 4 is an exploded perspective view showing the essential portions of an optical information recording/reproduction apparatus according to another embodiment of the present invention;
FIG. 5 is a plan view showing an assembled state of FIG. 4;
FIG. 6 is a partial perspective view showing a conventional optical information recording/reproduction apparatus; and
FIG. 7 is a plan view showing the essential portions of a conventional optical information recording/reproduction apparatus.

### Description of the Embodiments

The same reference marks are attached to the parts which perform the same operations as in FIGS. 6 and 7 showing a conventional example, and the description will be made.

### (First Embodiment)

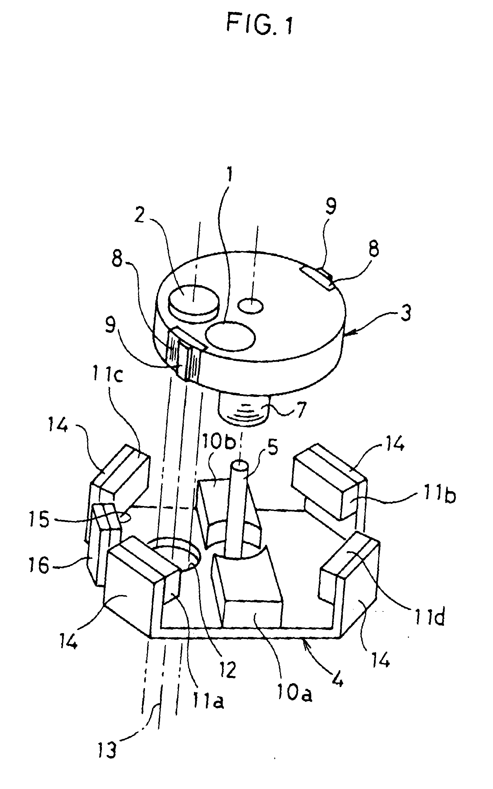

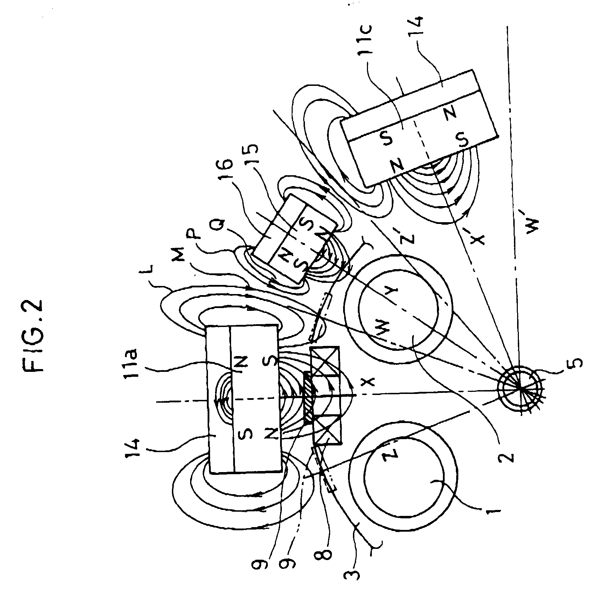

FIGS. 1 and 2 show an objective lens switching mechanism according to an embodiment of the present invention, and are different from FIGS. 6 and 7 showing a conventional example in that an auxiliary magnet 15 is added between the tracking magnets adjacent to each other in the plurality of tracking magnets 11a to 11d, being the same in other respects.

The auxiliary magnet 15 is mounted on 16 of the actuator base 4. Each of the tracking magnets 11a to 11d is magnetized on two poles indicated by marks N and S, and the auxiliary magnet 15 is magnetized to have the opposite polarity to the tracking 11a adjacent thereto.

The magnetic lines of force of the magnetic circuit thus constructed become as shown by marks L and P under the mutual influences of the magnets adjacent to each other as shown in FIG. 2. The position of the lens holder 3 in the direction of rotation is determined by a magnetically-balanced position between the tracking magnets 11a and 11b, and the magnetic pieces 9, or a magnetically-balanced position between the tracking magnets 11c and 11d, and the magnetic pieces 9. More specifically, the lens holder 3 stands still at the magnetically-balanced position at which the magnetic induction of the two is maximized and the magnetic moment of the magnetic pieces 9 in the magnetic fields of the tracking magnets is minimized.

Therefore, on focusing attention on a pair of tracking magnets 11a and 11b of the two pairs of tracking magnets, as the magnetically-balanced position, there are given two places marked with X and Y, indicated by alternate long and short dash lines in the figure. At positions Z and W, the lines of magnetic force caused by the tracking magnets and the auxiliary magnet cross each other so as to orthogonally intersect the width direction of the magnetic piece 9 under their influences. For this reason, the magnetic moment to the magnetic piece 9 is maximized, resulting in a magnetically-unstable position. At this time, the lens holder 3 stands still at the position of mark X or Y, which is the magnetically-balanced position.

In this embodiment, in addition to the tracking magnets 11a and 11b, another pair of tracking magnets 11c and 11d are provided, and as their magnetically-balanced positions, there are given three places marked with X, X' and Y, indicated by alternate long and short dash lines in FIG. 2.

At positions Z, Z', W and W', the lines of magnetic force caused by the tracking magnets and the auxiliary magnet 15 cross each other so as to orthogonally intersect the width direction of the magnetic piece 9 under their influences. For this reason, the magnetic moment to the magnetic piece 9 is maximized, resulting in a magnetically-unstable position.

At this time, the lens holder 3 stands still at the positions of marks X, X' or Y, which are the magnetically-balanced positions.

As described above, according to this embodiment, it is possible to easily avoid the magnetically-balanced position of the lens holder 3 in the tracking direction where an optical offset signal is produced, the magnetically-balanced positions can be provided at three places, and the angle of rotation of the lens holder can be enlarged.

### (Second Embodiment)

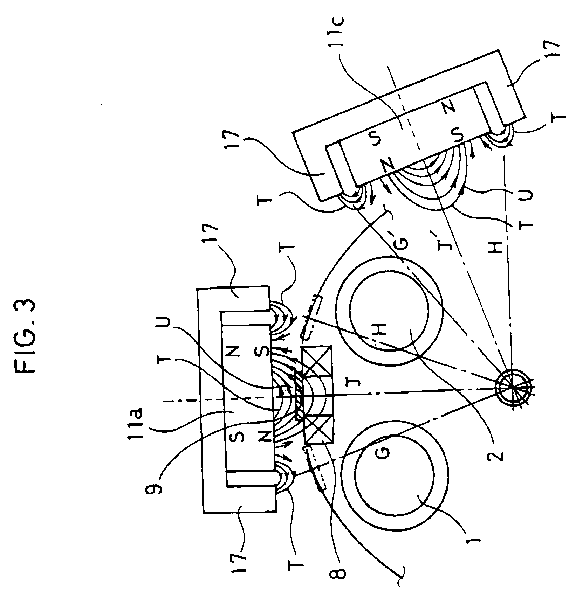

FIG. 3 shows a second embodiment according to the present invention.

In the first embodiment, there is disposed an auxiliary magnet 15 adjacent to the tracking magnet 11a, specifically between the tracking magnet 11a and the tracking magnet 11c to provide a magnetically-unstable position, but in this embodiment (second embodiment), a magnetically-unstable position is provided without using the auxiliary magnet 15.

Concretely, a folded portion 17 which constitutes a side yoke with respect to the tracking magnets 11a to 11d is formed on the convex piece 14 of the actuator base 4. Mark T designates magnetic lines of force from the tracking magnet, and arrow U designates a direction in which the magnetic lines of force T advance.

As regards magnetic lines of force from the magnetic circuit thus constructed, areas of magnetic lines of force having different directions from those in the central portion are produced on both sides of the tracking magnet by the operation of the folded portion 17. Thereby, the position of the lens holder 3 in the direction of rotation is determined by a magnetically-balanced position between the tracking magnet and the magnetic piece 9. More specifically, the lens holder 3 stands still at a magnetically-balanced position at which the magnetic induction of the two is maximized and the magnetic moment of the magnetic pieces 9 in the magnetic fields of the tracking magnets is minimized. Accordingly, as the magnetically-balanced positions, there are given two places marked with J and J', indicated by alternate long and short dash lines in the figure.

At positions G, G', H and H', the magnetic field strength of the tracking magnet on the magnetic piece 9 is decreased by the operation of the folded portion 17. For this reason, the lens holder 3 stands still at two positions indicated by marks J and J' at which the magnetic induction of the tracking magnet and the magnetic piece 9 is maximized.

As described above, it is possible to easily avoid a magnetically-balanced position of the lens holder in the tracking direction where an optical offset signal is produced even in the second embodiment.

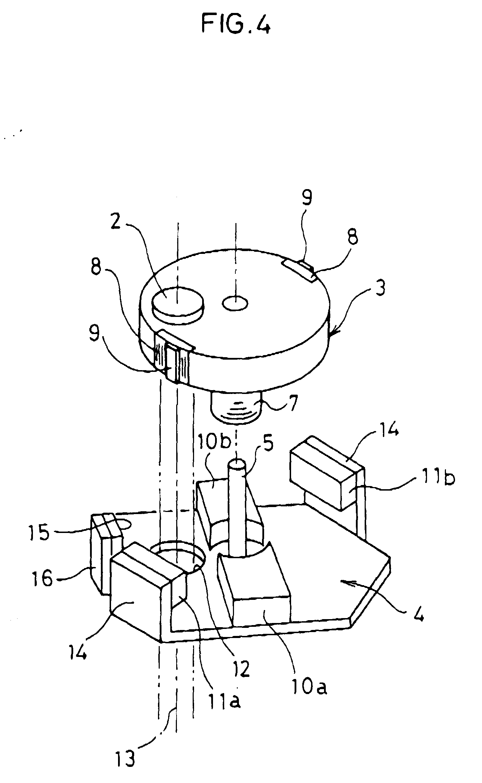

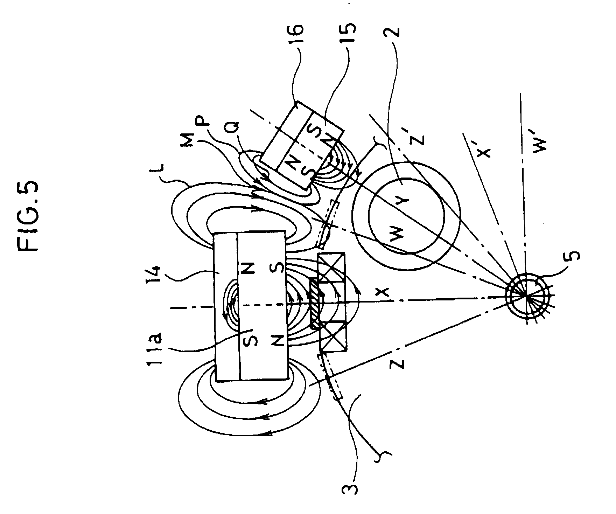

In the above-described first-embodiment, the description has been made of the case of the objective lens switching mechanism for the tracking magnets 11a to 11d, but even in the case of a tracking mechanism for causing the objective lens 2 to stand still at the normal position on the actuator base 4 by omitting the objective lens 1 and the tracking magnets 11c and 11d in the first embodiment as shown in FIGS. 4 and 5, it is possible to stabilize the magnetically-balanced position by providing an auxiliary magnet 15 adjacent to the tracking magnet 11a to thereby provide a magnetically-unstable position as shown in FIG. 5. This shows that good results could be obtained even if the technique of forming the folded portion 17, which serves as a side yoke, on the convex piece 14 on the actuator base 4 in the second embodiment is adopted for a tracking mechanism having only a pair of the tracking magnets.

In each of the above-described embodiments, the magnetic pieces 9 and the tracking coils 8 are disposed on the side of the lens holder 3 and the tracking magnets are disposed on the side of the actuator base 4, but the same effect can be expected even if the structure is arranged such that the magnetic pieces 9 and the tracking coils 8 which have been disposed on the side of the lens bolder 3 are disposed on the side of the actuator base 4, and the tracking magnets disposed on the side of the actuator base 4 are disposed on the side of the lens holder 3.

## Claims

1. An optical information recording/reproduction apparatus for rotatably supporting a lens holder (3) having a plurality of objective lenses (1, 2) on an actuator base (4), and having an objective lens switching mechanism for switching so that an objective lens for use, of said objective lenses (1, 2) stands still at a normal position on the actuator base (4), characterized in:
that said lens holder (3) is caused to stand still at said normal position by an attracting operation between magnetic pieces (9) fixed to said lens holder (3) and a plurality of tracking magnets (11) disposed on said actuator base (4) along the rotating path of said lens holder (3);
that there are provided tracking coils (8), disposed in the vicinity of said magnetic pieces (9) of said lens holder (3), for face to said tracking magnets (11);
that said tracking coils (8) are electrically energized on the basis of a tracking signal during recording/reproduction thereby to correct the static position of said lens holder (3), and said lens holder (3) is caused to rotate by electrically energizing said tracking coils (8) through a switching signal on switching the objective lens (1, 2) for use; and
that there is provided auxiliary magnetic field generating means, which provides a magnetically-unstable position, between said tracking magnets (11) adjacent to each other in said plurality of tracking magnets (11).

2. An optical information recording/reproduction apparatus according to claim 1, wherein those magnetic pieces (9) and tracking coils (8) which have been disposed on the side of said lens holder (3) are disposed on the side of said actuator base (4), and said plurality of tracking magnets (11) disposed on the side of said actuator base (4) are disposed on the side of said lens holder (3).

3. An optical information recording/reproduction apparatus according to claim 1 or 2, wherein said auxiliary magnetic field generating means is constituted by providing an auxiliary magnet (15) magnetized to the opposite polarity to said tracking magnets between said tracking magnets (11) adjacent to each other in said plurality of tracking magnets (11).

4. An optical information recording/reproduction apparatus according to claim 1 or 2, wherein said auxiliary magnetic field generating means is constituted by providing said tracking magnet (11) with a side yoke (17).

5. An optical information recording/reproduction apparatus for rotatably supporting a lens holder (3) having an objective lens (2) on an actuator base (4), and having a tracking mechanism for causing said objective lens (2) to stand still at a normal position on said actuator base(4), characterized in:
that said lens holder (3) is caused to stand still at said normal position by an attracting operation between magnetic pieces (9) fixed to said lens holder (3) and tracking magnets (11) disposed on said actuator base (4) along the rotating path of said lens holder (3);
that there are provided tracking coils (8), disposed in the vicinity of said magnetic pieces (9) of said lens holder (3), for facing to said tracking magnets (11);
that said tracking coils (8) are electrically energized on the basis of a tracking signal during recording/reproduction to thereby correct the static position of said lens holder (3); and
that there is provided auxiliary magnetic field generating means, which provides a magnetically-unstable position, adjacent to said tracking magnet (11).

6. An optical information recording/reproduction apparatus according to claim 5, wherein said auxiliary magnetic field generating means is constituted by providing an auxiliary magnet (15) magnetized to have the opposite polarity to said tracking magnet (11) adjacent thereto.

7. An optical information recording/reproduction apparatus according to claim 5, wherein said auxiliary magnetic field generating means is constituted by providing said tracking magnet (11) with a side yoke (17).
